# EUROPEAN PATENT APPLICATION

(11) **EP 4 350 599 A1**
(43) Date of publication of application: **10.04.2024**
(21) Application number: 23186969.4
(22) Date of filing: 21.07.2023
(51) Int. Cl.: G06Q 30/0601

(54) **PRODUCT PURCHASE SUPPORT PROGRAM, INFORMATION PROCESSING APPARATUS, AND PRODUCT PURCHASE SUPPORT METHOD**

(30) Priority: 04.10.2022 JP 2022160383
(71) Applicant: Fujitsu Limited, Kawasaki-shi, Kanagawa 211-8588 (JP)
(72) Inventor: YAMAZAKI, Takashi, Kawasaki-shi, Kanagawa 211-8588 (JP); OISHI, Yusuke, Kawasaki-shi, Kanagawa 211-8588 (JP)
(74) Representative: Hoffmann Eitle

(57) **Abstract**

A product purchase support program that causes a computer to execute a process, the process includes receiving a first list for a first products for which a first user has performed a predetermined action from a mobile terminal; specifying a second list for a second products that corresponds to the first products included; and transmitting, to the mobile terminal, information that indicates that the predetermined action has not been performed for the second products when it is determined that the mobile terminal has moved to a position different from a position where the second products are arranged before information that indicates that the first user has performed the predetermined action for the second products is received from the mobile terminal.

## Description

### FIELD

The embodiment discussed herein is related to a product purchase support program, an information processing apparatus, and a product purchase support method.

### BACKGROUND

In recent years, in a retail store such as a supermarket and a department store (hereinafter also simply referred to as a retail store), a mobile payment terminal (hereinafter also simply referred to as a mobile terminal) that enables a user to scan a product that the user intends to purchase and enables the user to purchase the product without going through a register has been used.

Additionally, in the retail store as described above, moreover, for example, by transmission of information regarding each product such as a bargain (hereinafter also simply referred to as product information) to the mobile terminal, sales promotion of the product by using the mobile terminal is performed.

Japanese Laid-open Patent Publication No. 2019-109807, Japanese Laid-open Patent Publication No. 2015-055977, and Japanese Laid-open Patent Publication No. 2016-206944 are disclosed as related art.

### SUMMARY

### [TECHNICAL PROBLEM]

Here, the product information as described above is likely to be transmitted also to, for example, a user who is significantly unlikely to purchase the product corresponding to the product information. Thus, in the retail store as described above, for example, it is desired to accurately transmit the product information regarding each product to a user who may be determined to be likely to purchase each product.

Therefore, in one aspect, an object of an embodiment is to provide a product purchase support program, an information processing apparatus, and a product purchase support method that enable transmission of product information regarding each product to a user who is likely to purchase each product.

### [SOLUTION TO PROBLEM]

According to an aspect of the embodiments, a product purchase support program that causes a computer to execute a process, the process includes receiving a first list for a first products for which a first user has performed a predetermined action from a mobile terminal; specifying a second list for a second products that corresponds to the first products included; and transmitting, to the mobile terminal, information that indicates that the predetermined action has not been performed for the second products when it is determined that the mobile terminal has moved to a position different from a position where the second products are arranged before information that indicates that the first user has performed the predetermined action for the second products is received from the mobile terminal.

### [ADVANTAGEOUS EFFECTS OF INVENTION]

According to one aspect, it is possible to efFiciently transmit product information regarding each product to a user who needs each product.

### BRIEF DESCRIPTION OF DRAWINGS

FIG. 1 is a diagram for describing a configuration of an information processing system 10;
FIG. 2 is a diagram for describing a hardware configuration of an information processing apparatus 1;
FIG. 3 is a diagram for describing functions of the information processing apparatus 1;
FIG. 4 is a flowchart for describing an outline of product purchase support processing in a first embodiment;
FIG. 5 is a diagram for describing a specific example of the product purchase support processing in the first embodiment;
FIG. 6 is a diagram for describing the specific example of the product purchase support processing in the first embodiment;
FIG. 7 is a diagram for describing another specific example of the product purchase support processing in the first embodiment;
FIG. 8 is a diagram for describing the another specific example of the product purchase support processing in the first embodiment;
FIG. 9 is a flowchart for describing details of the product purchase support processing in the first embodiment;
FIG. 10 is a flowchart for describing the details of the product purchase support processing in the first embodiment;
FIG. 11 is a flowchart for describing the details of the product purchase support processing in the first embodiment;
FIG. 12 is a flowchart for describing the details of the product purchase support processing in the first embodiment;
FIG. 13 is a flowchart for describing the details of the product purchase support processing in the first embodiment;
FIG. 14 is a flowchart for describing the details of the product purchase support processing in the first embodiment;
FIG. 15 is a flowchart for describing the details of the product purchase support processing in the first embodiment;
FIG. 16 is a flowchart for describing the details of the product purchase support processing in the first embodiment;
FIG. 17 is a flowchart for describing the details of the product purchase support processing in the first embodiment;
FIG. 18 is a diagram for describing a specific example of receipt information 131;
FIG. 19 is a diagram for describing a specific example of the receipt information 131;
FIG. 20 is a diagram for describing a specific example of training data 132;
FIG. 21 is a diagram for describing a specific example of the training data 132;
FIG. 22 is a diagram for describing a specific example of the training data 132; and
FIG. 23 is a diagram for describing a specific example of position information 134.

### DESCRIPTION OF EMBODIMENTS

### [Configuration of Information Processing System in First Embodiment]

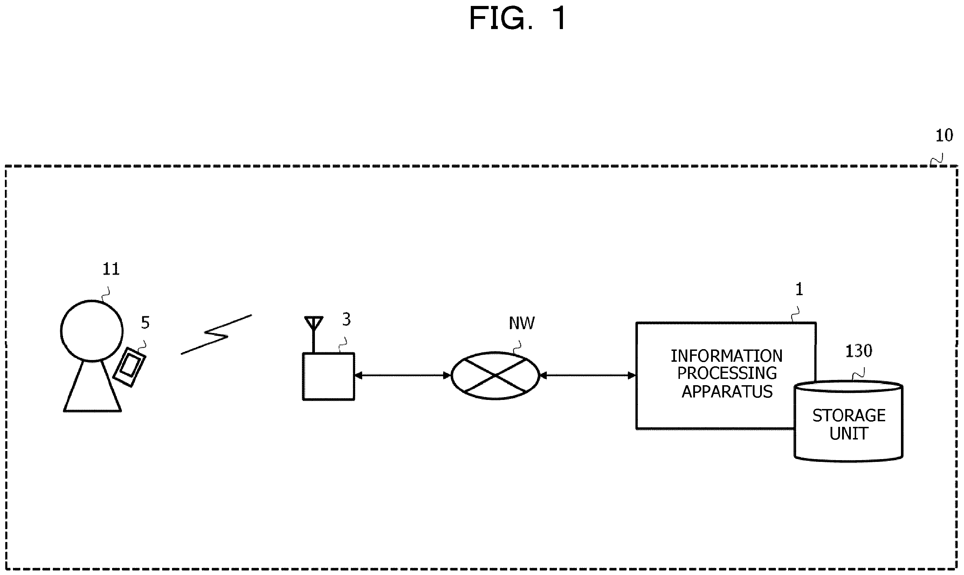

First, a configuration of an information processing system 10 will be described. FIG. 1 is a diagram for describing the configuration of the information processing system 10.

The information processing system 10 illustrated in FIG. 1 includes, for example, an information processing apparatus 1 and one or more mobile terminals 5.

The information processing apparatus 1 is, for example, one or more physical machines or virtual machines, and executes processing of supporting purchase of a product by a user 11 (hereinafter also referred to as product purchase support processing). Furthermore, the information processing apparatus 1 includes, for example, a storage unit 130 that stores each piece of information used for the execution of the product purchase support processing.

The mobile terminal 5 is, for example, a mobile terminal possessed by the user 11 who purchases a product at a retail store (hereinafter also simply referred to as the user 11) at least at the time of visiting the store. The mobile terminal 5 may be, for example, a mobile terminal such as a smartphone owned by the user 11, or a mobile terminal such as a smartphone borrowed by the user 11 at the retail store.

Specifically, for example, in a case where the user 11 inputs information indicating the product that the user 11 intends to purchase (hereinafter also referred to as planned purchase information) by scanning the product, the mobile terminal 5 transmits the scanned planned purchase information to the information processing apparatus 1.

With this configuration, for example, the user 11 may shorten a waiting time for checkout at a register, and may shorten a time needed for shopping at the retail store.

Note that, in the example illustrated in FIG. 1, for example, the mobile terminal 5 may perform wireless communication with an access point 3 by using Wireless Fidelity (WiFi (registered trademark)) or the like. Furthermore, for example, the information processing apparatus 1 and the access point 3 may perform communication (for example, wired communication) via a network NW such as the Internet.

Here, the information processing apparatus 1 transmits, for example, product information regarding a product such as a bargain to each mobile terminal 5. Specifically, for example, the information processing apparatus 1 transmits the product information to the mobile terminal 5 set to permit transmission of the product information among the mobile terminals 5 owned by the user 11. Then, in this case, for example, the mobile terminal 5 that has received the product information displays the product information transmitted from the information processing apparatus 1 on an output screen (not illustrated) to allow the user 11 to browse the product information transmitted from the information processing apparatus 1.

With this configuration, in the retail store, for example, it is possible to arrow the user 11 to browse information (product information) leading to sales promotion of each product.

However, in this case, the product information transmitted from the information processing apparatus 1 is likely to be transmitted also to the user 11 who is significantly unlikely to purchase the product corresponding to the product information. Specifically, the product information transmitted from the information processing apparatus 1 may be transmitted also to, for example, the user 11 who visits a retail store 12 but who is not interested in the product corresponding to the product information (who does not have an intention of purchasing the product corresponding to the product information). Furthermore, the product information transmitted from the information processing apparatus 1 may be transmitted also to, for example, the user 11 who has not visited the retail store 12 or the user 11 who is not scheduled to visit the retail store 12. Thus, in the retail store as described above, it is desired to accurately transmit the product information regarding each product to the user 11 who may be determined to be likely to purchase each product.

Therefore, for example, the information processing apparatus 1 in the present embodiment receives, from the mobile terminal 5 possessed by the user 11 who is visiting the store (hereinafter also referred to as a first user 11), a list (hereinafter also referred to as a first list) for one or more products for which the first user 11 has performed a predetermined action. The first list is, for example, a list for one or more products for which the first user 11 has input the planned purchase information to the mobile terminal 5. In other words, the predetermined action is, for example, inputting the planned purchase information to the mobile terminal 5.

Then, for example, the information processing apparatus 1 specifies another list (hereinafter also referred to as a second list) for one or more products having a correspondence relationship with the one or more products included in the received first list. The second list is, for example, a list for one or more products that may be predicted from the one or more products included in the first list that the first user 11 is likely to indicate an intention to purchase in the future. In other words, the second list is, for example, a list for one or more products that may be predicted that the first user 11 is likely to input the planned purchase information in the future.

Specifically, the information processing apparatus 1 inputs the received first list to a machine learning model (hereinafter also simply referred to as a learning model) that has trained by using a plurality of pieces of training data each including a combination of one or more products for which each user 11 has performed the predetermined action at the same time in the past (for example, at the time of one visit to the store). Then, for example, the information processing apparatus 1 specifies, as the second list, a list for one or more products output from the learning model along with the input of the first list.

Thereafter, for example, in a case where it is determined that the mobile terminal 5 has moved to a position different from a position where the one or more products included in the second list are arranged before information indicating that the first user 11 has performed the predetermined action for the one or more products included in the second list is received from the mobile terminal 5, the information processing apparatus 1 transmits, to the mobile terminal 5, information indicating that the predetermined action has not been performed for the one or more products included in the second list.

In other words, for example, the information processing apparatus 1 in the present embodiment predicts a product that may be predicted that the first user 11 is likely to input the planned purchase information in the future (hereinafter also referred to as a predicted product) from each product for which the first user 11 has already input the planned purchase information, every time the first user 11 inputs the planned purchase information of the product to the mobile terminal 5. Then, for example, in a case where the first user 11 moves away from an arrangement position of the predicted product without inputting the planned purchase information of the predicted product to the mobile terminal 5, the information processing apparatus 1 determines that the first user 11 is likely to have forgotten to purchase the predicted product or that the first user 11 is unlikely to recognize presence or the arrangement position of the predicted product, and transmits product information regarding the predicted product (in other words, product information that proposes purchase of the predicted product) to the mobile terminal 5 possessed by the first user 11.

With this configuration, for example, the information processing apparatus 1 in the present embodiment may accurately transmit the product information regarding each product to the user 11 who may be determined to be likely to purchase each product. Furthermore, for example, the information processing apparatus 1 may transmit the product information regarding each product at the time when the first user 11 is highly likely to decide to purchase each product by transmitting the product information regarding each product in response to the first user 11 moving away from the arrangement position of each product. Thus, for example, the information processing apparatus 1 may enhance the sales promotion effect of each product accompanying the transmission of the product information to each mobile terminal 5.

[Hardware Configuration of Information Processing Apparatus]

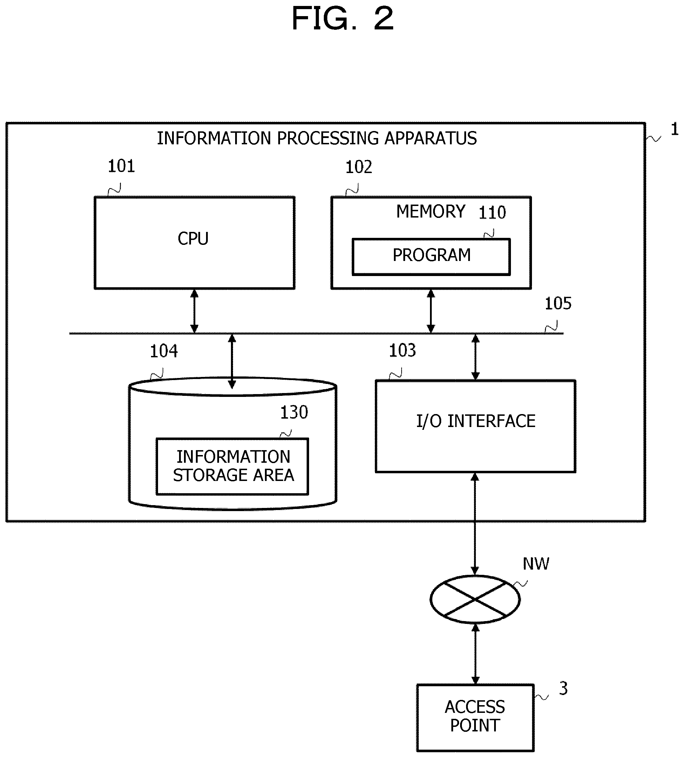

Next, a hardware configuration of the information processing apparatus 1 will be described. FIG. 2 is a diagram for describing the hardware configuration of the information processing apparatus 1.

As illustrated in FIG. 2, the information processing apparatus 1 includes, for example, a central processing unit (CPU) 101 as a processor, a memory 102, a communication device (input/output (I/O) interface) 103, and a storage 104. The respective units are coupled to each other via a bus 105.

The storage 104 includes, for example, a program storage area (not illustrated) that stores a program 110 for performing the product purchase support processing. Furthermore, the storage 104 includes, for example, the storage unit 130 (hereinafter also referred to as an information storage area 130) that stores information to be used when the product purchase support processing is performed. Note that the storage 104 may be, for example, a hard disk drive (HDD) or a solid state drive (SSD).

The CPU 101 executes, for example, the program 110 loaded from the storage 104 to the memory 102 to perform the product purchase support processing.

Furthermore, for example, the communication device 103 communicates with the access point 3 via the network NW.

### [Functions of Information Processing Apparatus]

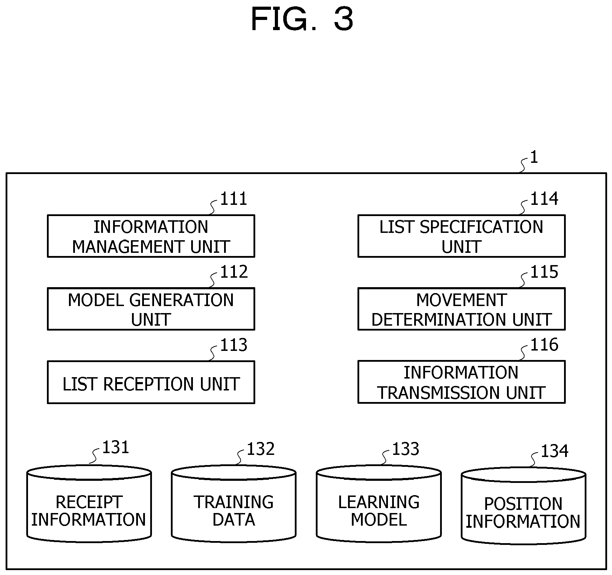

Next, functions of the information processing apparatus 1 will be described. FIG. 3 is a diagram for describing the functions of the information processing apparatus 1.

As illustrated in FIG. 3, for example, the information processing apparatus 1 implements various functions including an information management unit 111, a model generation unit 112, a list reception unit 113, a list specification unit 114, a movement determination unit 115, and an information transmission unit 116 through organic collaboration between hardware such as the CPU 101 and the memory 102 and the program 110.

Furthermore, as illustrated in FIG. 3, the information processing apparatus 1 stores, for example, receipt information 131, training data 132, learning model 133, and position information 134 in the information storage area 130.

The information management unit 111 receives, for example, a plurality of pieces of receipt information 131 input by an administrator of the information processing apparatus 1 (hereinafter also referred to as an administrator). The receipt information here is typically provided as POS (point of sales) data. Each of the plurality of pieces of receipt information 131 is, for example, information included in one receipt issued when each user 11 purchased a product at the same time in the past in the retail store (for example, at the time of one visit to the store). Then, the information management unit 111 stores the received plurality of pieces of receipt information 131 in, for example, the information storage area 130.

The model generation unit 112 generates, for example, a plurality of pieces of training data 132 from the plurality of pieces of receipt information 131 stored in the information storage area 130. Each of the plurality of pieces of training data 132 is, for example, training data generated from information included in the receipt information 131. In other words, each of the plurality of pieces of training data 132 is, for example, training data generated from a combination of one or more products purchased by a certain user 11 in one accounting at the time of one visit to the store. Then, for example, the model generation unit 112 generates the learning model 133 by performing machine learning of the generated plurality of pieces of training data 132. Thereafter, the model generation unit 112 stores the generated learning model 133 in, for example, the information storage area 130. Note that the learning model 133 may be, for example, a recurrent neural network (RNN).

The list reception unit 113 receives, for example, the first list for one or more products for which the first user 11 has input planned purchase information to the mobile terminal 5 from the mobile terminal 5 possessed by the first user 11 who is visiting the store.

The list specification unit 114 specifies, for example, the second list for one or more products having a correspondence relationship with the one or more products included in the first list received by the list reception unit 113. Specifically, for example, the list specification unit 114 specifies, as the second list, a list for one or more products output along with input of the first list received by the list reception unit 113 to the learning model 133.

The movement determination unit 115 determines, for example, whether or not the mobile terminal 5 has moved to a position different from an arrangement position of the one or more products included in the second list before receiving planned purchase information of the one or more products included in the second list from the mobile terminal 5.

Specifically, for example, the movement determination unit 115 determines whether or not the mobile terminal 5 has moved to a position different from a range including all the arrangement positions of the one or more products included in the second list before receiving all the pieces of planned purchase information of the one or more products included in the second list from the mobile terminal 5.

Furthermore, for example, the movement determination unit 115 determines, for each of the one or more products included in the second list, whether or not the mobile terminal 5 has moved to a position different from a range including an arrangement position of each product before receiving planned purchase information of each product from the mobile terminal 5.

The information transmission unit 116 transmits, for example, to the mobile terminal 5, information indicating that the planned purchase information of the one or more product included in the second list has not been input in a case where the movement determination unit 115 determines that the mobile terminal 5 has moved to the position different from the arrangement position of the one or more products included in the second list before the planned purchase information of the one or more product included in the second list is received from the mobile terminal 5. The position information 134 will be described later.

### [Outline of Product Purchase Support Processing in First Embodiment]

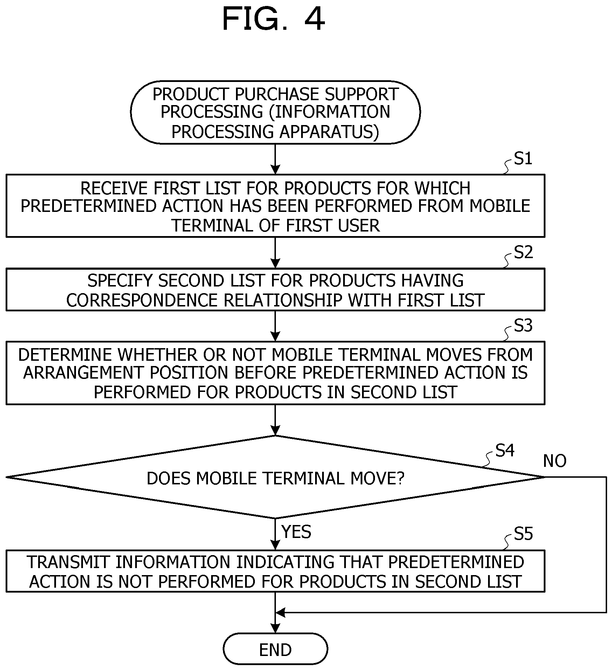

Next, an outline of the first embodiment will be described. FIG. 4 is a flowchart for describing the outline of the product purchase support processing in the first embodiment.

As illustrated in FIG. 4, for example, the information processing apparatus 1 receives a first list for one or more products for which the first user 11 has performed a predetermined action from the mobile terminal 5 possessed by the first user 11 (S1).

Then, for example, the information processing apparatus 1 specifies a second list for one or more products having a correspondence relationship with the one or more products included in the first list received in the processing of S1 (S2).

Thereafter, for example, the information processing apparatus 1 determines whether or not the mobile terminal 5 has moved to a position different from a position where the one or more products included in the second list are arranged before information indicating that the first user 11 has performed the predetermined action for the one or more products included in the second list specified in the processing of S2 is received from the mobile terminal 5 (S3).

As a result, for example, in a case where it is determined that the mobile terminal 5 has moved to the position different from the position where the one or more products included in the second list are arranged before the information indicating that the first user 11 has performed the predetermined action for the one or more products included in the second list specified in the processing of S2 is received from the mobile terminal 5 (YES in S4), the information processing apparatus 1 transmits, to the mobile terminal 5, information indicating that the predetermined action has not been performed for the one or more products included in the second list specified in the processing of S2 (S5).

On the other hand, for example, in a case where it is determined that the mobile terminal 5 has not yet moved to the position different from the position where the one or more products included in the second list are arranged before the information indicating that the first user 11 has performed the predetermined action for the one or more products included in the second list specified in the processing of S2 is received from the mobile terminal 5 (NO in S4), the information processing apparatus 1 does not perform the processing of S5.

With this configuration, for example, the information processing apparatus 1 in the present embodiment may accurately transmit the product information regarding each product to the user 11 who may be determined to be likely to purchase each product. Furthermore, for example, the information processing apparatus 1 may transmit the product information regarding each product at the time when the first user 11 is highly likely to decide to purchase each product by transmitting the product information regarding each product in response to the first user 11 moving away from the arrangement position of each product. Thus, for example, the information processing apparatus 1 may enhance the sales promotion effect of each product accompanying the transmission of the product information to each mobile terminal 5.

### [Specific Example (1) of Product Purchase Support Processing in First Embodiment]

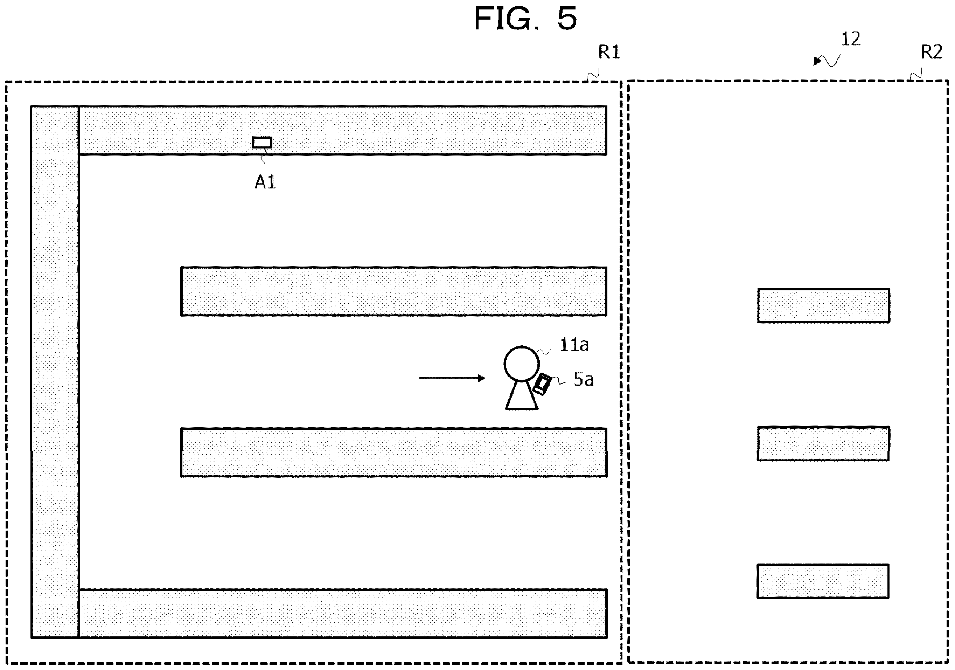

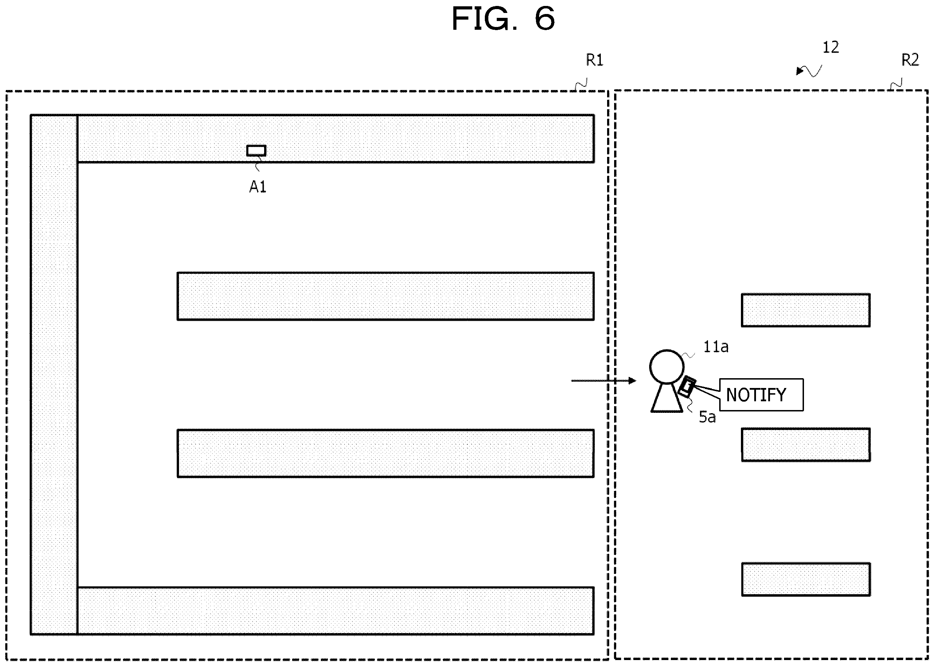

Next, a specific example of the product purchase support processing in the first embodiment will be described. FIGs. 5 and 6 are diagrams for describing the specific example of the product purchase support processing in the first embodiment. Hereinafter, a case where a user 11a visits the retail store 12 will be described. Furthermore, hereinafter, a range in which each product is arranged in the retail store 12 is also referred to as a range R1, and a range in which each product is not arranged in the retail store 12 (for example, a range in which checkout at a register is also performed) is referred to as a range R2. In other words, the range R2 is, for example, a range in which an information processing apparatus (hereinafter also referred to as another information processing apparatus) that performs processing (checkout at a register) of confirming purchase of a product for which the user 11a has input planned purchase information to the mobile terminal 5 is arranged.

For example, the information processing apparatus 1 predicts a product A1 as a product that the user 11a is likely to purchase in the future by using a mobile terminal 5a from the one or more products scanned by the user 11a by using the mobile terminal 5a in the processing of S2. Then, for example, as illustrated in FIGs. 5 and 6, in a case where the user 11a moves from the range R1 to the range R2 without scanning the product A1 (inputting planned purchase information), the information processing apparatus 1 determines that the user 11a has moved to a different position from the range including an arrangement position of the product A1 (the range R1) without scanning the product A1, and transmits product information regarding the product A1 to the mobile terminal 5a.

In other words, in the example illustrated in FIGs. 5 and 6, the range R2 is, for example, a range in which checkout at a register is performed. Thus, for example, in a case where the user 11a moves from the range R1 to the range R2 without scanning the product A1, the information processing apparatus 1 may determine that the user 11a is likely to have forgotten to buy the product A1 or that the user 11a is unlikely to recognize presence or the arrangement position of the product A1. Therefore, in this case, for example, the information processing apparatus 1 notifies the mobile terminal 5a of product information proposing to purchase the product A1.

With this configuration, for example, the information processing apparatus 1 may transmit the product information regarding the product A1 to the user 11a who may be determined to be likely to purchase the product A1 at the time when it may be determined that the product A1 is highly likely to be purchased.

### [Specific Example (2) of Product Purchase Support Processing in First Embodiment]

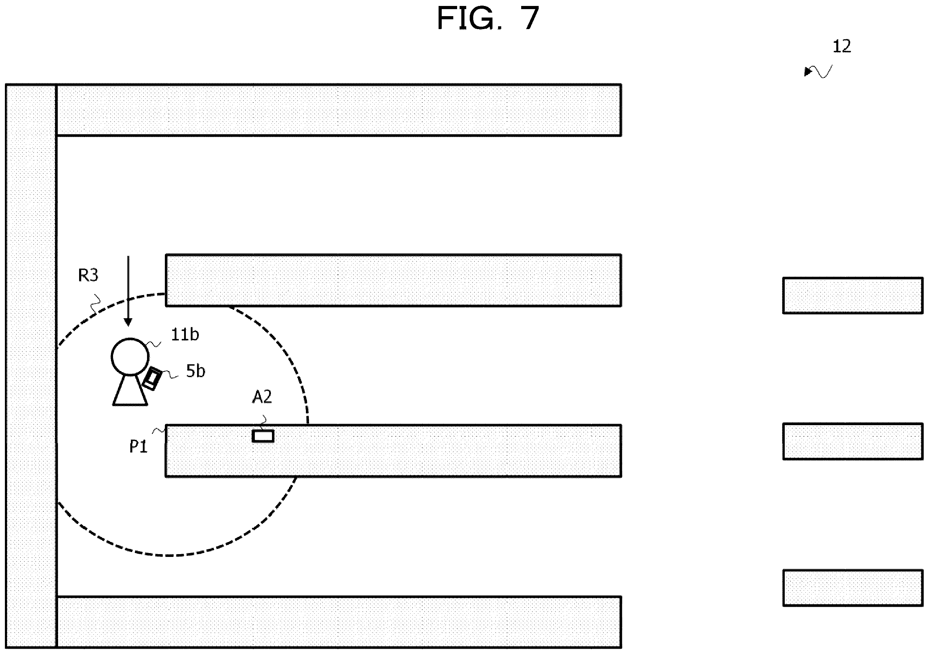

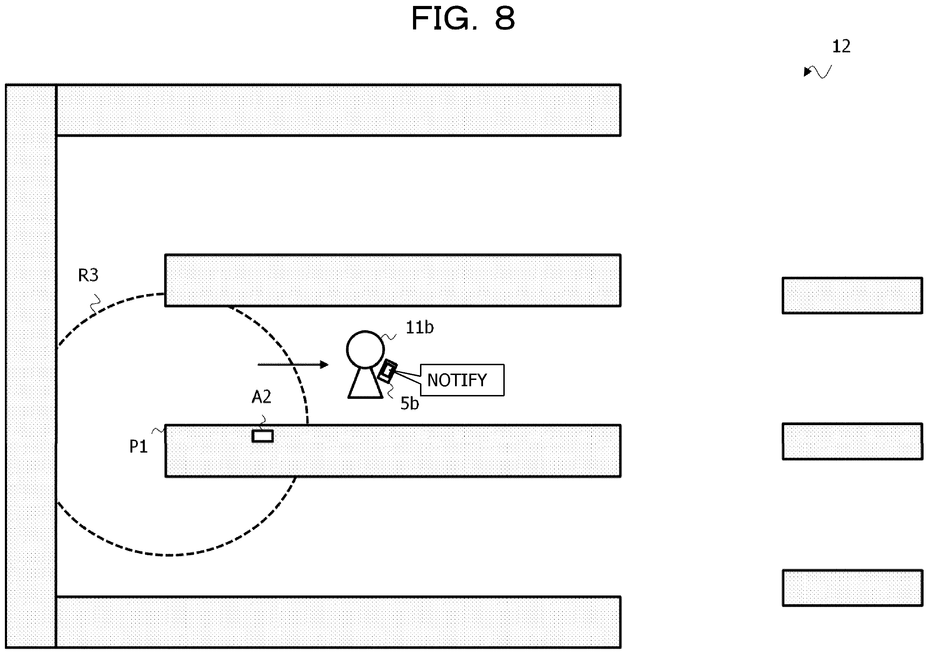

Next, another specific example of the product purchase support processing in the first embodiment will be described. FIGs. 7 and 8 are diagrams for describing the another specific example of the product purchase support processing in the first embodiment. Hereinafter, a case where a user 11b visits the retail store 12 will be described. Furthermore, hereinafter, a range in the vicinity of a position where a product A2 is arranged in the retail store 12 is also referred to as a range R3.

Note that, in the example illustrated in FIGs. 7 and 8, the range R3 is a range in which a distance from one of the corners of a shelf in which the product A2 is arranged (hereinafter also referred to as a corner P1) is a predetermined distance (in other words, a circular range centered on the corner P1). Furthermore, the predetermined distance here may be, for example, a predetermined multiple of a width of a passage in the retail store 12.

For example, the information processing apparatus 1 predicts the product A2 as a product that the user 11b is likely to purchase in the future by using a mobile terminal 5b from the one or more products scanned by the user 11b by using the mobile terminal 5b in the processing of S2. Then, for example, as illustrated in FIGs. 7 and 8, in a case where the user 11b moves into the range R3 and the user 11b further moves out of the range R3 without scanning the product A2, the information processing apparatus 1 determines that the user 11b has moved to a different position from the range including an arrangement position of the product A2 (the range R3) without scanning the product A2, and transmits product information regarding the product A2 to the mobile terminal 5b.

In other words, in the example illustrated in FIGs. 7 and 8, the range R3 is a range in the vicinity of the position where the product A2 is arranged. Thus, for example, in a case where the user 11b has moved out of the range R3 without scanning the product A2 even though the user 11b has once moved into the range R3, the information processing apparatus 1 may determine that the user 11b is likely to have forgotten to buy the product A2 or that the user 11b is unlikely to recognize presence or the arrangement position of the product A2. Therefore, in this case, for example, the information processing apparatus 1 notifies the mobile terminal 5b of information proposing to purchase the product A2.

With this configuration, for example, the information processing apparatus 1 may transmit the product information regarding the product A2 to the user 11b who may be determined to be likely to purchase the product A2 at the time when it may be determined that the product A2 is highly likely to be purchased.

Note that, in the example illustrated in FIGs. 7 and 8, the case has been described where the range in which the distance from the corner P1 of the shelf in which the product A2 is arranged is the predetermined distance is the range R3, but the embodiment is not limited to this. Specifically, the range R3 may be, for example, a part of the range in which the distance from the corner P1 of the shelf in which the product A2 is arranged is the predetermined distance (for example, a semicircular range centered on the corner P1). Furthermore, the range R3 may be, for example, a range in which a distance from each of the plurality of corners of the shelf in which the product A2 is arranged is a predetermined distance. Furthermore, the range R3 may be, for example, a range in which a distance from the arrangement position of the product A2 is a predetermined distance.

### [Details of Product Purchase Support Processing in First Embodiment]

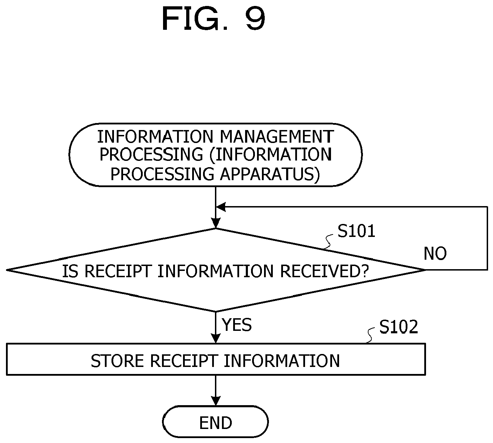

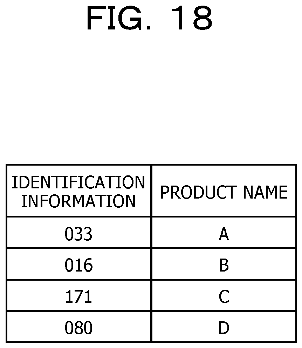

Next, details of the first embodiment will be described. FIGs. 9 to 17 are flowcharts for describing the details of the product purchase support processing in the first embodiment. Furthermore, FIGs. 18 to 23 are diagrams for describing the details of the product purchase support processing in the first embodiment.

### [Information Management Processing]

First, processing of managing the receipt information 131 (hereinafter also referred to as information management processing) in the product purchase support processing will be described. FIG. 9 is a flowchart for describing the information management processing.

As illustrated in FIG. 9, for example, the information management unit 111 stands by until the receipt information 131 is input by an administrator (NO in S101). Specifically, for example, the information management unit 111 stands by until the administrator inputs the receipt information 131 via an administrator terminal (not illustrated).

Then, in a case where the input of the receipt information 131 is received (YES in S101), for example, the information management unit 111 stores the receipt information 131 for which the input is received in the information storage area 130 (S102).

In other words, for example, in a case where the number of store visits of the users 11 at the retail store 12 is 500 on average per day, and the administrator has input a plurality of pieces of receipt information 131 corresponding to receipts for 100 days, the plurality of pieces of receipt information 131 corresponding to 50,000 receipts is accumulated in the information storage area 130. Hereinafter, a specific example of the receipt information 131 will be described.

### [Specific Example of Receipt Information]

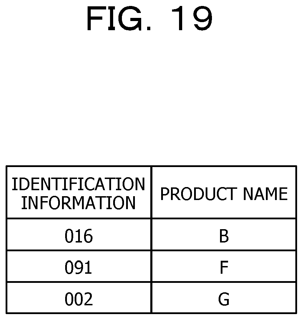

FIGs. 18 and 19 are diagrams for describing the specific example of the receipt information 131. Specifically, FIG. 18 illustrates the receipt information 131 corresponding to a receipt issued when the user 11a described with reference to FIGs. 5 and 6 purchases products at the retail store 12 (hereinafter also referred to as receipt information 131a). Furthermore, FIG. 19 illustrates the receipt information 131 corresponding to a receipt issued when the user 11b described with reference to FIGs. 7 and 8 purchases products at the retail store 12 (hereinafter also referred to as receipt information 131b).

For example, the receipt information 131 illustrated in FIGs. 18 and 19 includes, as items, "identification information" in which identification information that identifies each product is set, and "product name" in which a product name of each product is set.

Specifically, in a first row in the receipt information 131a illustrated in FIG. 18, "033" is set as the "identification information", and "A" is set as the "product name". Furthermore, in a second row in the receipt information 131a illustrated in FIG. 18, "016" is set as the "identification information", and "B" is set as the "product name". Furthermore, in a third row in the receipt information 131a illustrated in FIG. 18, "171" is set as the "identification information", and "C" is set as the "product name". Furthermore, in a fourth row in the receipt information 131a illustrated in FIG. 18, "080" is set as the "identification information", and "D" is set as the "product name".

On the other hand, in a first row in the receipt information 131b illustrated in FIG. 19, "016" is set as the "identification information", and "B" is set as the "product name". Furthermore, in a second row in the receipt information 131b illustrated in FIG. 19, "091" is set as the "identification information", and "F" is set as the "product name". Moreover, in a third row in the receipt information 131b illustrated in FIG. 19, "002" is set as the "identification information", and "G" is set as the "product name".

In other words, the receipt information 131a illustrated in FIG. 18 is the receipt information 131 corresponding to the receipt of when the four products have been purchased. Furthermore, the receipt information 131b illustrated in FIG. 19 is the receipt information 131 corresponding to the receipt of when the three products have been purchased.

### [Model Generation Processing]

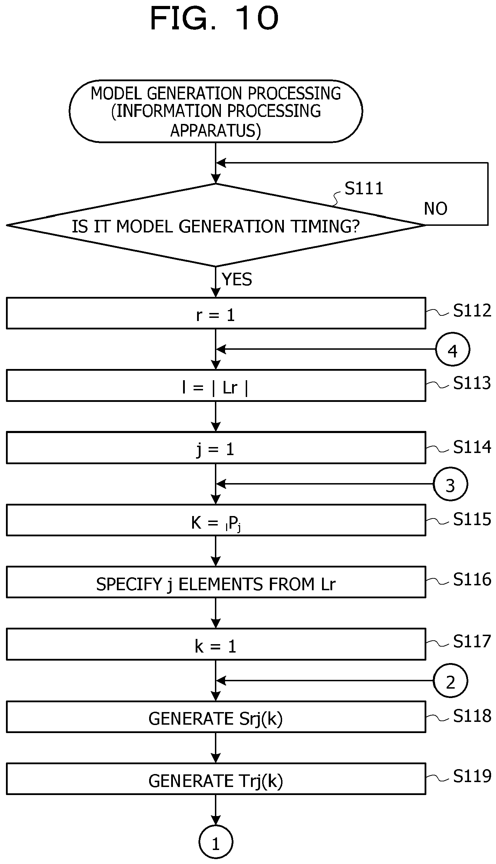

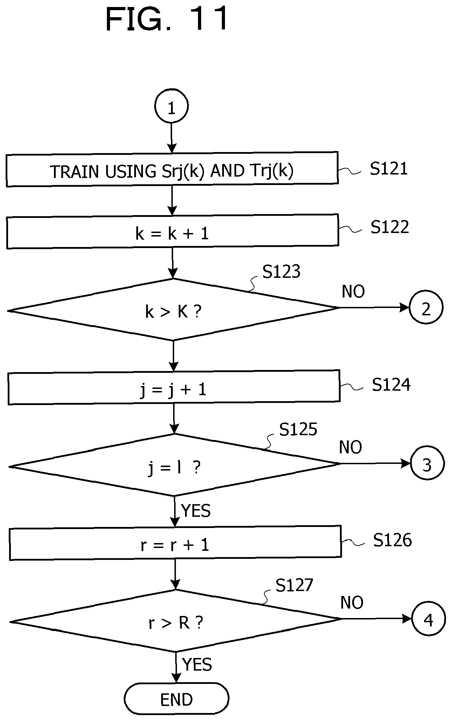

Next, processing of generating the learning model 133 (hereinafter also referred to as model generation processing) in the product purchase support processing will be described. FIGs. 10 and 11 are flowcharts for describing the model generation processing.

As illustrated in FIG. 10, for example, the model generation unit 112 stands by until a model generation time comes (NO in S111). The model generation time may be, for example, a time when an administrator inputs information indicating that the learning model 133 is to be generated to the information processing apparatus 1.

Then, in a case where the model generation time comes (YES in S111), for example, the model generation unit 112 sets 1 to a variable r indicating identification information of each of the plurality of pieces of receipt information 131 stored in the information storage area 130 (S112).

Subsequently, for example, the model generation unit 112 specifies a list Lr that is a list of products included in the receipt information 131 corresponding to the variable r set in the processing of S112 or processing of S126 described later (hereinafter also referred to as the processing of S112 or the like). Then, for example, the model generation unit 112 sets the number of products included in the specified list Lr as a variable I (S113).

Specifically, for example, in a case where the identification information of the receipt information 131a described with reference to FIG. 18 is set as the variable r, the model generation unit 112 sets 4, which is the number of products included in the receipt information 131a described with reference to FIG. 18, to the variable I in the processing of S113.

Next, for example, the model generation unit 112 sets 1 to a variable j indicating the number of products to be extracted from the list Lr specified in the processing of S113 (S114).

Then, for example, the model generation unit 112 sets, as a variable K, the number of permutations (the number of patterns) of products of the number indicated by the variable j set in the processing of S114 or processing of S124 described later (hereinafter also referred to as the processing of S114 or the like) from the products included in the list Lr specified in the processing of S113 (S115).

Moreover, for example, the model generation unit 112 specifies one combination of the products of the number indicated by the variable j set in the processing of S114 or the like from the products included in the list Lr specified in the processing of S113 (S116).

Subsequently, for example, the model generation unit 112 sets 1 to a variable k indicating identification information of the permutation of the products of the number indicated by the variable j set in the processing of S114 or the like from the products included in the list Lr specified in the processing of S113 (S117).

Thereafter, for example, the model generation unit 112 generates a sequence Srj(k) indicating the permutation of the products of the number indicated by the variable j specified in the processing of S116 (S118).

Then, for example, the model generation unit 112 generates a sequence Trj(k) that is a sequence indicating a combination of products other than the products included in the sequence Srj(k) generated in the processing of S118 among the products included in the list Lr specified in the processing of S113 (S119).

Subsequently, for example, the model generation unit 112 generates the training data 132 by combining the sequence Srj(k) generated in the processing of S118 and the sequence Trj(k) generated in the processing of S119. Then, as illustrated in FIG. 11, for example, the model generation unit 112 causes the learning model 133 to be subjected to training using the generated training data 132 (S121).

Next, for example, the model generation unit 112 adds 1 to the variable k (S122). Then, for example, the model generation unit 112 determines whether or not the variable k to which 1 is added in the processing of S122 exceeds the variable K set in the processing of S115 (S123).

As a result, in a case where it is determined that the variable k to which 1 is added in the processing of S122 does not exceed the variable K set in the processing of S115 (NO in S123), for example, the model generation unit 112 performs the processing of S118 and subsequent steps again.

On the other hand, in a case where it is determined that the variable k to which 1 is added in the processing of S122 exceeds the variable K set in the processing of S115 (YES in S123), for example, the model generation unit 112 adds 1 to the variable j (S124).

Then, for example, the model generation unit 112 determines whether or not the variable j to which 1 is added in the processing of S124 has reached the variable I set in the processing of S113 (S125).

As a result, in a case where it is determined that the variable j to which 1 is added in the processing of S124 has not reached the variable I set in the processing of S113 (NO in S125), for example, the model generation unit 112 performs the processing of S115 and subsequent steps again.

On the other hand, in a case where it is determined that the variable j to which 1 is added in the processing of S124 has reached the variable I set in the processing of S113 (YES in S125), for example, the model generation unit 112 adds 1 to the variable r (S126).

Then, for example, the model generation unit 112 determines whether or not the variable r to which 1 is added in the processing of S126 exceeds a constant R indicating the number of receipts corresponding to each of the plurality of pieces of receipt information 131 stored in the information storage area 130 (S127).

As a result, in a case where it is determined that the variable r to which 1 is added in the processing of S126 does not exceed the constant R (NO in S127), for example, the model generation unit 112 performs the processing of S113 and subsequent steps again.

On the other hand, in a case where it is determined that the variable r to which 1 is added in the processing of S126 exceeds the constant R (YES in S127), for example, the model generation unit 112 ends the model generation processing. Hereinafter, a specific example of the training data 132 will be described.

### [Specific Example (1) of training data]

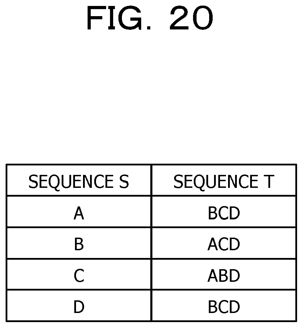

FIGs. 20 to 22 are diagrams for describing the specific example of the training data 132. Specifically, FIGs. 20 to 22 are diagrams for describing the specific example of the training data 132 generated from a receipt (receipt in which the variable r is 1) when four products (a product A, a product B, a product C, and a product D) are purchased. Note that, hereinafter, description will be made assuming that a product name of each product included in the sequence Srj(k) (hereinafter also referred to as a sequence S) and a product name of each product included in the sequence Trj(k) (hereinafter also referred to as a sequence T) are included in each piece of the training data 132.

First, a specific example of the training data 132 generated in a case where the variable r is 1 and the variable j is 1 among the pieces of training data 132 generated in the model generation processing will be described. FIG. 20 is a diagram for describing the specific example of the training data 132 generated in the case where the variable r is 1 and the variable j is 1.

Specifically, for example, in a case where the product A is specified in the first processing of S116 in a case where the variable j is 1 (processing of S116 in a case where the variable k is 1), the model generation unit 112 specifies "A" as a sequence S11(1) and specifies "B", "C", and "D" as a sequence T11(1). Thus, in this case, as illustrated in a first row of FIG. 20, the model generation unit 112 generates, for example, the training data 132 in which "A" is set as the "sequence S" and "BCD" is set as the "sequence T".

Furthermore, for example, in a case where the product B is specified in the second processing of S116 in a case where the variable j is 1 (processing of S116 in a case where the variable k is 2), the model generation unit 112 specifies "B" as a sequence S11(2) and specifies "A", "C", and "D" as a sequence T11(2). Thus, in this case, as illustrated in a second row of FIG. 20, the model generation unit 112 generates, for example, the training data 132 in which "B" is set as the "sequence S" and "ACD" is set as the "sequence T".

Furthermore, for example, in a case where the product C is specified in the third processing of S116 in a case where the variable j is 1 (processing of S116 in a case where the variable k is 3), the model generation unit 112 specifies "C" as a sequence S11(3) and specifies "A", "B", and "D" as a sequence T11(3). Thus, in this case, as illustrated in a third row of FIG. 20, the model generation unit 112 generates, for example, the training data 132 in which "C" is set as the "sequence S" and "ABD" is set as the "sequence T".

Moreover, for example, in a case where the product D is specified in the fourth processing of S116 in a case where the variable j is 1 (processing of S116 in a case where the variable k is 4), the model generation unit 112 specifies "D" as a sequence S11(4) and specifies "A", "B", and "C" as a sequence T11(4). Thus, in this case, as illustrated in a fourth row of FIG. 20, the model generation unit 112 generates, for example, the training data 132 in which "D" is set as the "sequence S" and "ABC" is set as the "sequence T".

In other words, in a case where the variable j is 1, the variable K calculated in the processing of S115 is 4. Thus, in this case, the model generation unit 112 generates the four pieces of training data 132 by performing the processing of S121 four times, and causes the learning model 133 to be subjected to training using each piece of the generated training data 132.

### [Specific Example (2) of training data]

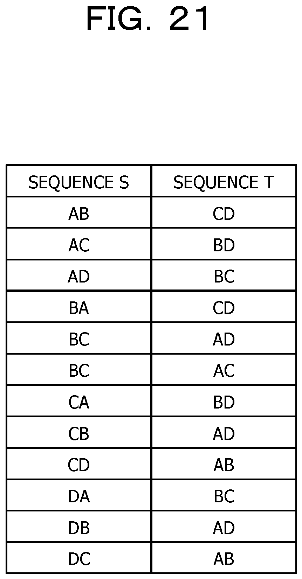

Next, a specific example of the training data 132 generated in a case where the variable r is 1 and the variable j is 2 among the pieces of training data 132 generated in the model generation processing will be described. FIG. 21 is a diagram for describing the specific example of the training data 132 generated in the case where the variable r is 1 and the variable j is 2.

Specifically, for example, in a case where the product A and the product B are specified in this order in the first processing of S116 in a case where the variable j is 2 (processing of S116 in a case where the variable k is 1), the model generation unit 112 specifies "A" and "B" as a sequence S12(1) and specifies "C" and "D" as a sequence T12(1). Thus, in this case, as illustrated in a first row of FIG. 21, the model generation unit 112 generates, for example, the training data 132 in which "AB" is set as the "sequence S" and "CD" is set as the "sequence T".

Furthermore, for example, in a case where the product A and the product C are specified in this order in the second processing of S116 in a case where the variable j is 2 (processing of S116 in a case where the variable k is 2), the model generation unit 112 specifies "A" and "C" as a sequence S12(2) and specifies "B" and "D" as a sequence T12(2). Thus, in this case, as illustrated in a second row of FIG. 21, the model generation unit 112 generates, for example, the training data 132 in which "AC" is set as the "sequence S" and "BD" is set as the "sequence T".

Furthermore, for example, in a case where the product A and the product D are specified in this order in the third processing of S116 in a case where the variable j is 2 (processing of S116 in a case where the variable k is 3), the model generation unit 112 specifies "A" and "D" as a sequence S12(3) and specifies "B" and "C" as a sequence T12(3). Thus, in this case, as illustrated in a third row of FIG. 21, the model generation unit 112 generates, for example, the training data 132 in which "AD" is set as the "sequence S" and "BC" is set as the "sequence T". Description of other information included in FIG. 21 is omitted.

In other words, in a case where the variable j is 2, the variable K calculated in the processing of S115 is 12. Thus, in this case, the model generation unit 112 generates 12 pieces of training data 132 by performing the processing of S121 12 times, and causes the learning model 133 to be subjected to training using each piece of the generated training data 132.

### [Specific Example (3) of training data]

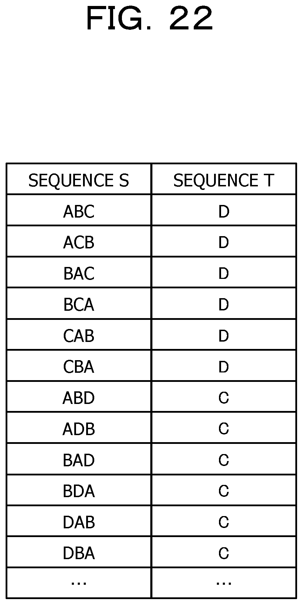

Next, a specific example of the training data 132 generated in a case where the variable r is 1 and the variable j is 3 among the pieces of training data 132 generated in the model generation processing will be described. FIG. 22 is a diagram for describing the specific example of the training data 132 generated in the case where the variable r is 1 and the variable j is 3.

Specifically, for example, in a case where the product A, the product B, and the product C are specified in this order in the first processing of S116 in a case where the variable j is 3 (processing of S116 in a case where the variable k is 1), the model generation unit 112 specifies "A", "B", and "C" as a sequence S13(1) and specifies "D" as a sequence T13(1). Thus, in this case, as illustrated in a first row of FIG. 22, the model generation unit 112 generates, for example, the training data 132 in which "ABC" is set as the "sequence S" and "D" is set as the "sequence T".

Furthermore, for example, in a case where the product A, the product C, and the product B are specified in this order in the second processing of S116 in a case where the variable j is 3 (processing of S116 in a case where the variable k is 2), the model generation unit 112 specifies "A", "C", and "B" as a sequence S13(2) and specifies "D" as a sequence T13(2). Thus, in this case, as illustrated in a second row of FIG. 22, the model generation unit 112 generates, for example, the training data 132 in which "ACB" is set as the "sequence S" and "D" is set as the "sequence T".

Furthermore, for example, in a case where the product B, the product A, and the product C are specified in this order in the third processing of S116 in a case where the variable j is 3 (processing of S116 in a case where the variable k is 3), the model generation unit 112 specifies "B", "A", and "C" as a sequence S13(3) and specifies "D" as a sequence T13(3). Thus, in this case, as illustrated in a third row of FIG. 22, the model generation unit 112 generates, for example, the training data 132 in which "BAC" is set as the "sequence S" and "D" is set as the "sequence T". Description of other information included in FIG. 22 is omitted.

In other words, in a case where the variable j is 3, the variable K calculated in the processing of S115 is 24. Thus, in this case, the model generation unit 112 generates 24 pieces of training data 132 by performing the processing of S121 24 times, and causes the learning model 133 to be subjected to training using each piece of the generated training data 132.

As described above, for example, the model generation unit 112 generates the training data 132 including a combination of one or more products purchased by each user 11 at the same time in the past (for example, at the time of one visit to the store), and generates the learning model 133 by performing training using the generated training data 132.

With this configuration, for example, by using the generated learning model 133, the information processing apparatus 1 in the present embodiment may predict a product for which a new user 11 is likely to indicate an intention to purchase in the future from products for which the new user 11 has already indicated an intention to purchase during a store visit (in other words, products for which planned purchase information has been input).

### [Position Management Processing]

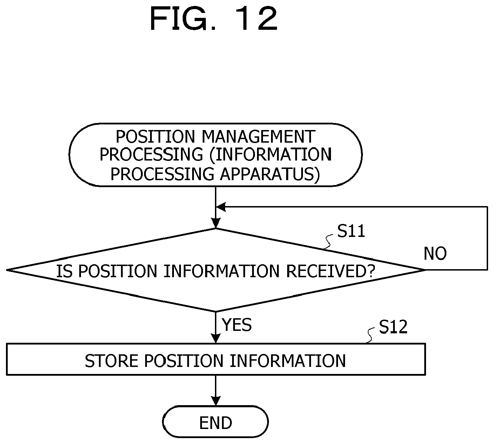

Next, processing of managing the position information 134 (hereinafter also referred to as position management processing) in the product purchase support processing will be described. FIG. 12 is a flowchart for describing the position management processing.

As illustrated in FIG. 12, for example, the information management unit 111 stands by until the position information 134 is received from the mobile terminal 5 (NO in S11). The position information 134 is, for example, information indicating a position of each mobile terminal 5 in the retail store 12.

Note that, for example, the mobile terminal 5 may transmit the position information 134 indicating a current position of the mobile terminal 5 to the information processing apparatus 1 at each predetermined time interval (for example, every second). Furthermore, for example, the mobile terminal 5 may calculate the current position by using positioning from the access point 3, or the like, and transmit the position information 134 indicating the calculated current position to the information processing apparatus 1.

Then, in a case where the position information 134 is received from the mobile terminal 5 (YES in S11), for example, the information management unit 111 stores the received position information 134 in the information storage area 130 (S12). Hereinafter, a specific example of the position information 134 will be described.

### [Specific Example of Position Information]

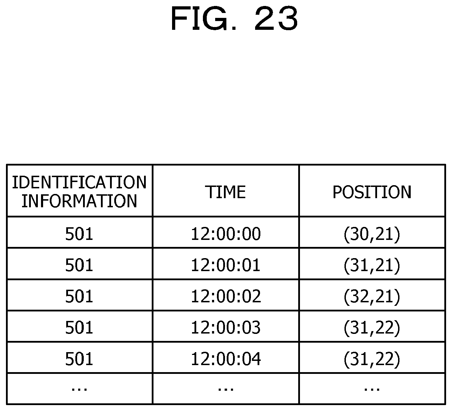

FIG. 23 is a diagram for describing the specific example of the position information 134.

For example, the position information 134 illustrated in FIG. 23 includes, as items, "identification information" in which identification information that identifies each mobile terminal 5 is set, "time" in which each time is set, and "position" in which information indicating a position of each mobile terminal 5 at each time is set. Note that, for example, the inside of the retail store 12 may be divided in advance into areas for each predetermined size (hereinafter also referred to as unit areas). Specifically, each of the plurality of unit areas may be, for example, a rectangular area having one side of 50 cm, 1 m, or the like. Then, as the "position", for example, a position of a unit area including a current position of each mobile terminal 5 (for example, a center position of the unit area) may be set.

Specifically, in the position information 134 illustrated in FIG. 23, for example, "501" is set as the "identification information", "12:00:00" is set as the "time", and "(30,21)" is set as the "position" in information in a first row. Furthermore, in the position information 134 illustrated in FIG. 23, for example, "501" is set as the "identification information", "12:00:01" is set as the "time", and "(31,21)" is set as the "position" in information in a second row. Description of other information included in FIG. 23 is omitted.

### [Main Processing (1) of Product Purchase Support Processing]

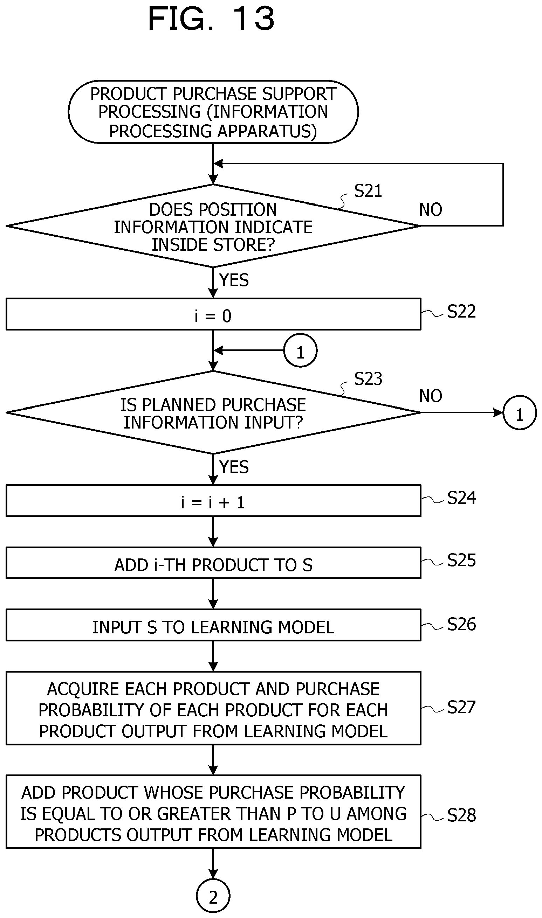

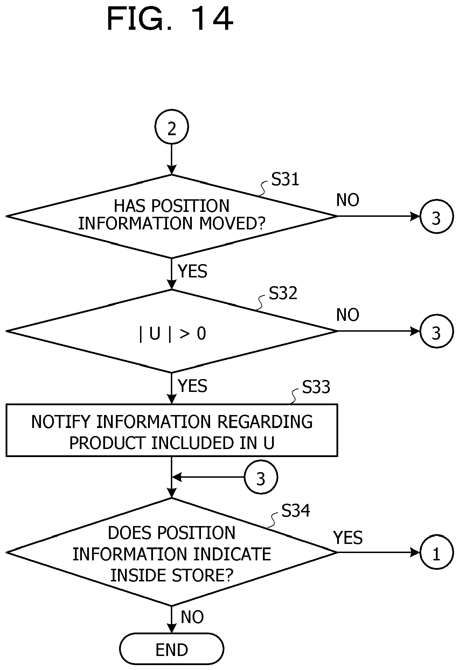

Next, main processing of the product purchase support processing will be described. FIGs. 13 and 14 are flowcharts for describing the main processing of the product purchase support processing. Specifically, FIGs. 13 and 14 are flowcharts for describing the main processing of the product purchase support processing corresponding to the specific example described with reference to FIGs. 5 and 6. Note that, hereinafter, the main processing of the product purchase support processing performed until one new user 11 (hereinafter also referred to as a specific user 11) leaves the retail store 12 after visiting the retail store 12 will be described. In other words, description will be made assuming that, in a case where a plurality of users 11 visits the retail store 12, the main processing of the product purchase support processing is performed in parallel for each of the plurality of users 11.

As illustrated in FIG. 13, for example, the list reception unit 113 stands by until the position information 134 indicating a position in the retail store 12 is received from the new mobile terminal 5 (hereinafter also referred to as the specific mobile terminal 5) in the processing of S11 (NO in S21). In other words, for example, the list reception unit 113 stands by until the new user 11 who owns the new mobile terminal 5 visits the retail store 12. Furthermore, for example, the list reception unit 113 stands by until the new user 11 borrows the new mobile terminal 5 in the retail store 12.

Then, in a case where the position information 134 indicating the position in the retail store 12 is received from the specific mobile terminal 5 in the processing of S11 (YES in S21), for example, the list reception unit 113 sets 0 to a variable i indicating identification information of a product for which the specific user 11 has input planned purchase information to the specific mobile terminal 5 (S22).

Subsequently, for example, the list reception unit 113 stands by until the specific user 11 inputs the planned purchase information of the product to the specific mobile terminal 5 (NO in S23). Specifically, for example, the list reception unit 113 stands by until the planned purchase information of the product input by the specific user 11 to the mobile terminal 5 is received from the mobile terminal 5.

As a result, in a case where the specific user 11 inputs the planned purchase information of the product to the specific mobile terminal 5 (YES in S23), for example, the list specification unit 114 adds 1 to the variable i (S24).

Then, for example, the list specification unit 114 adds, to the sequence S, information (for example, a product name) indicating the product (in other words, the i-th product) corresponding to the planned purchase information input in the processing of S23 (S25).

Thereafter, for example, the list specification unit 114 inputs the sequence S (information indicating each of one or more products included in the sequence S) to the learning model 133 (S26).

Specifically, for example, in a case where the product A and the product C are added in this order to the sequence S in the processing of S25, the list specification unit 114 inputs the sequence S including the product A and the product C in this order to the learning model 133.

Then, for example, the list specification unit 114 acquires the sequence T output from the learning model 133 and information related to the sequence T output from the learning model 133 (S27). Specifically, for example, the list specification unit 114 acquires information indicating each of one or more products included in the sequence T and a probability (hereinafter also referred to as a purchase probability) that each of the one or more products included in the sequence T will be purchased by the specific user 11. In other words, the purchase probability of each of the one or more products included in the sequence T is, for example, a probability that each of the one or more products included in the sequence T is further purchased in a case where each of the one or more products included in the sequence S is purchased.

Specifically, for example, in a case where each of information indicating that the purchase probability of the product B is 80(%) and information indicating that the purchase probability of the product D is 30(%) is output by inputting the sequence S including the product A and the product C in this order to the learning model 133 in the processing of S26, the list specification unit 114 acquires each of the information indicating that the purchase probability of the product B is 80(%) and the information indicating that the purchase probability of the product D is 30(%).

Subsequently, for example, the list specification unit 114 adds, to a list U, information indicating a product whose purchase probability is equal to or greater than a predetermined threshold P among the one or more products included in the sequence T output from the learning model 133 (S28).

Specifically, for example, in a case where each of the information indicating that the purchase probability of the product B is 80(%) and the information indicating that the purchase probability of the product D is 30(%) is acquired in the processing of S27 and the threshold P is 70(%), the list specification unit 114 adds, to the list U, the information indicating the product B whose purchase probability exceeds 70(%).

In other words, for example, the list specification unit 114 adds, to the list U, information indicating a product for which it may be determined that the specific user 11 is highly likely to input planned purchase information in the future, as a candidate of a product for notifying the specific user 11 of product information.

Thereafter, as illustrated in FIG. 14, for example, the movement determination unit 115 determines whether or not a position (a current position of the specific mobile terminal 5) indicated by the latest position information 134 received from the specific mobile terminal 5 in the processing of S11 is a position different from a range including an arrangement position of the product in the retail store 12 (S31).

In other words, as described with reference to FIGs. 5 and 6, for example, the movement determination unit 115 determines whether or not the specific mobile terminal 5 has moved from the range R1 to the range R2.

As a result, in a case where it is determined that the current position of the specific mobile terminal 5 is a position different from the range including the arrangement position of the product in the retail store 12 (YES in S31), for example, the movement determination unit 115 determines whether or not the information indicating the product is included in the list U (S32).

Then, in a case where it is determined that the information indicating the product is included in the list U (YES in S32), for example, the information transmission unit 116 notifies the specific mobile terminal 5 of the information (product information) regarding the product included in the list U (S33).

Specifically, for example, in a case where the information indicating the product B is included in the list U, the information transmission unit 116 notifies the specific mobile terminal 5 of the product information regarding the product B.

In other words, for example, in a case where the specific mobile terminal 5 has moved to a position different from the range including the arrangement position of the product in the retail store 12 and the information indicating the product is included in the list U, the information transmission unit 116 determines that the specific user 11 is likely to have forgotten to buy the product whose information is included in the list U, or that the specific user 11 is unlikely to recognize presence or the arrangement position of the product whose information is included in the list U. Then, in this case, for example, the information transmission unit 116 notifies the mobile terminal 5 of the product information whose information is included in the list U.

Thereafter, for example, the list specification unit 114 determines whether or not the current position of the specific mobile terminal 5 is in the store (S34).

As a result, in a case where it is determined that the current position of the specific mobile terminal 5 is in the store (YES in S34), for example, the list reception unit 113 performs the processing of S23 and subsequent steps again.

On the other hand, in a case where it is determined that the current position of the specific mobile terminal 5 is not in the store (NO in S34), for example, the information processing apparatus 1 ends the main processing of the product purchase support processing.

In other words, the case where the current position of the specific mobile terminal 5 is the position outside the store may be determined as a case where the specific user 11 has already left the retail store 12. Thus, in this case, for example, the information processing apparatus 1 ends the main processing of the product purchase support processing for the specific user 11 (specific mobile terminal 5).

Note that, for example, even in a case where the current position of the specific mobile terminal 5 is in the store, the information processing apparatus 1 may end the main processing of the product purchase support processing in a case where the current position of the specific mobile terminal 5 is a return position of each mobile terminal 5.

### [Main Processing (2) of Product Purchase Support Processing]

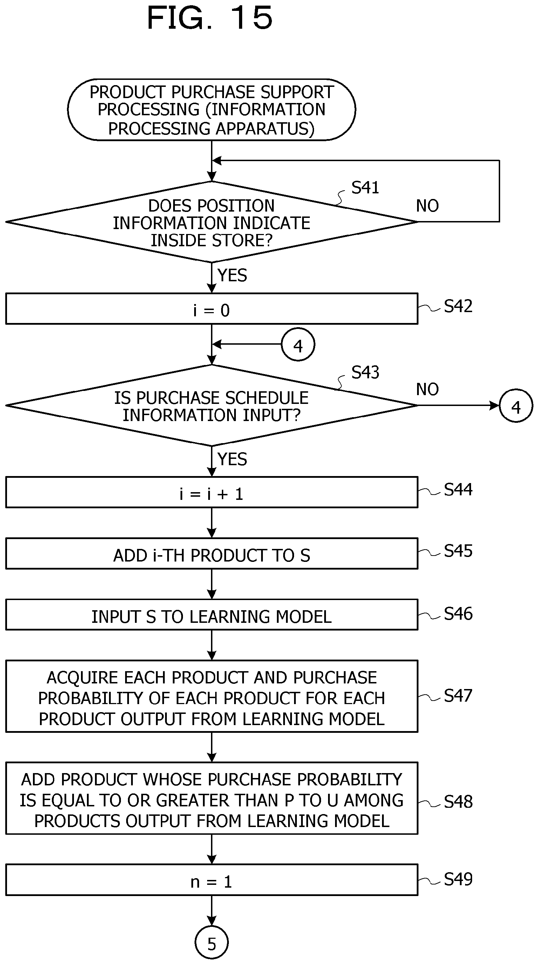

Next, the main processing of the product purchase support processing will be described. FIGs. 15 to 17 are flowcharts for describing the main processing of the product purchase support processing. Specifically, FIGs. 15 to 17 are flowcharts for describing the main processing of the product purchase support processing corresponding to the specific example described with reference to FIGs. 7 and 8.

As illustrated in FIG. 15, for example, the list reception unit 113 stands by until the position information 134 indicating the position in the retail store 12 is received from the specific mobile terminal 5 in the processing of S11 (NO in S41).

Then, in a case where the position information 134 indicating the position in the retail store 12 is received from the specific mobile terminal 5 in the processing of S11 (YES in S41), for example, the list reception unit 113 sets 0 to the variable i indicating identification information of a product for which the specific user 11 has input planned purchase information to the specific mobile terminal 5 (S42).

Subsequently, for example, the list reception unit 113 stands by until the specific user 11 inputs the planned purchase information of the product to the specific mobile terminal 5 (NO in S43).

As a result, in a case where the specific user 11 inputs the planned purchase information of the product to the specific mobile terminal 5 (YES in S43), for example, the list specification unit 114 adds 1 to the variable i (S44).

Then, for example, the list specification unit 114 adds, to the sequence S, information indicating the product (in other words, the i-th product) corresponding to the planned purchase information input in the processing of S43 (S45).

Thereafter, for example, the list specification unit 114 inputs the sequence S (information indicating each of one or more products included in the sequence S) to the learning model 133 (S46).

Then, for example, the list specification unit 114 acquires the sequence T output from the learning model 133 and information related to the sequence T output from the learning model 133 (S47). Specifically, for example, the list specification unit 114 acquires information indicating each of one or more products included in the sequence T and a purchase probability that each of the one or more products included in the sequence T will be purchased by the specific user 11.

Subsequently, for example, the list specification unit 114 adds, to the list U, information indicating a product whose purchase probability is equal to or greater than the predetermined threshold P among the one or more products included in the sequence T output from the learning model 133 (S48).

Thereafter, for example, the movement determination unit 115 sets 1 to a variable n indicating identification information of the product whose information is included in the list U (S49).

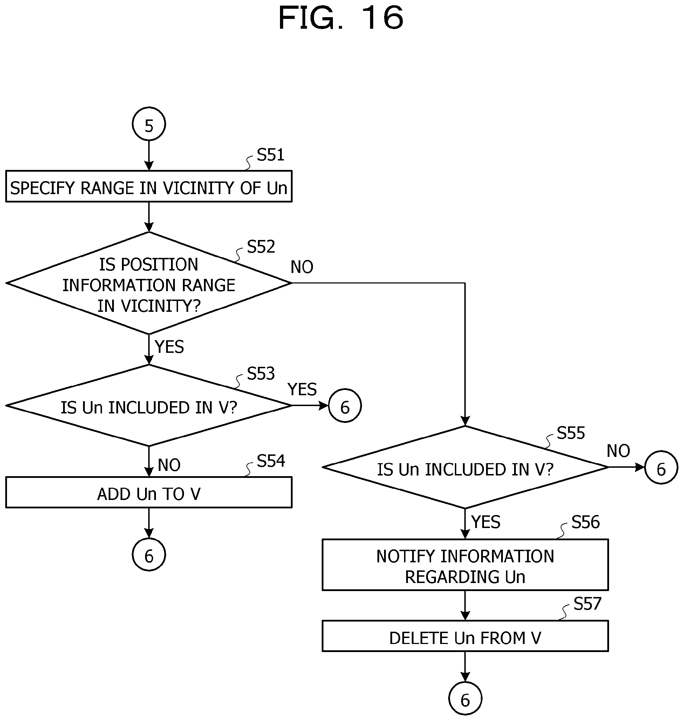

Subsequently, as illustrated in FIG. 16, for example, the movement determination unit 115 specifies a range in the vicinity of an n-th product (hereinafter also referred to as a product Un) included in the list U (S51). Specifically, the range in the vicinity of the product Un may be, for example, the range R3 corresponding to the product Un (the range R3 described with reference to FIGs. 7 and 8).

Then, for example, the movement determination unit 115 determines whether or not the current position of the specific mobile terminal 5 is included in the range in the vicinity of the product Un specified in the processing of S51 (S52).

As a result, in a case where it is determined that the current position of the specific mobile terminal 5 is included in the range in the vicinity of the product Un specified in the processing of S51 (YES in S52), for example, the movement determination unit 115 determines whether or not information indicating the product Un is included in a list V including information indicating a product including the current position of the specific mobile terminal 5 in the range in the vicinity of the product (S53).

Then, in a case where it is determined that the information indicating the product Un is not included in the list V (NO in S53), for example, the movement determination unit 115 adds the information indicating the product Un to the list V (S54). Thereafter, the movement determination unit 115 performs processing of S61 and subsequent steps.

On the other hand, in a case where it is determined that the information indicating the product Un is included in the list V including the product including the current position of the specific mobile terminal 5 in the range in the vicinity of the product (YES in S53), for example, the movement determination unit 115 performs the processing of S61 and subsequent steps without performing the processing of S54.

Furthermore, in a case where it is determined that the current position of the specific mobile terminal 5 is not included in the range in the vicinity of the product Un specified in the processing of S51 (NO in S52), for example, the movement determination unit 115 determines whether or not the information indicating the product Un is included in the list V (S55).

As a result, in a case where it is determined that the information indicating the product Un is included in the list V (YES in S55), for example, the information transmission unit 116 transmits the information regarding the product Un to the specific mobile terminal 5 (S56).

In other words, the case where the information indicating the product Un is included in the list V and it is determined that the current position of the specific mobile terminal 5 is not included in the range in the vicinity of the product Un is a case where the position of the specific mobile terminal 5 has once moved into the range in the vicinity of the product Un and then has further moved out of the range in the vicinity of the product Un. Thus, in this case, for example, the information transmission unit 116 determines that the specific user 11 is likely to have forgotten to buy the product Un or that the specific user 11 is unlikely to recognize presence or an arrangement position of the product Un, and notifies the specific mobile terminal 5 of the information (product information) regarding the product Un.

Thereafter, for example, the movement determination unit 115 deletes the information indicating the product Un from the list V (S57). Moreover, for example, the movement determination unit 115 performs the processing of S61 and subsequent steps.

On the other hand, in a case where it is determined that the information indicating the product Un is not included in the list V (NO in S55), for example, the movement determination unit 115 performs the processing of S61 and subsequent steps without performing the processing of S56 and S57.

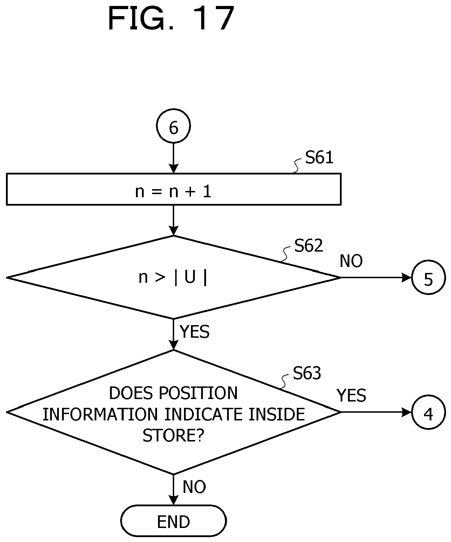

Then, as illustrated in FIG. 17, for example, the movement determination unit 115 adds 1 to the variable n (S61).

Subsequently, the movement determination unit 115 determines whether or not the variable n to which 1 is added in the processing of S61 exceeds the number of products included in the list U (S62).

As a result, in a case where it is determined that the variable n to which 1 is added in the processing of S61 does not exceed the number of products included in the list U (NO in S62), for example, the movement determination unit 115 performs the processing of S51 and subsequent steps again.

On the other hand, in a case where it is determined that the variable n to which 1 is added in the processing of S61 exceeds the number of products included in the list U (YES in S62), for example, the list specification unit 114 determines whether or not the current position of the mobile terminal 5 is in the store (S63).

Then, in a case where it is determined that the current position of the specific mobile terminal 5 is in the store (YES in S63), for example, the list reception unit 113 performs the processing of S43 and subsequent steps again.

On the other hand, in a case where it is determined that the current position of the specific mobile terminal 5 is not in the store (NO in S63), for example, the information processing apparatus 1 ends the main processing of the product purchase support processing.

As described above, for example, the information processing apparatus 1 in the present embodiment receives a first list for one or more products for which the first user 11 has performed a predetermined action from the mobile terminal 5 possessed by the first user 11.

Then, for example, the information processing apparatus 1 specifies a second list for one or more products having a correspondence relationship with the one or more products included in the received first list.

Thereafter, for example, in a case where it is determined that the mobile terminal 5 has moved to a position different from a position where the one or more products included in the second list are arranged before information indicating that the first user 11 has performed the predetermined action for the one or more products included in the second list is received from the mobile terminal 5, the information processing apparatus 1 transmits, to the mobile terminal 5, information indicating that the predetermined action has not been performed for the one or more products included in the second list.

In other words, for example, the information processing apparatus 1 in the present embodiment predicts a predicted product that may be predicted that the first user 11 is likely to input planned purchase information in the future from each product for which the first user 11 has already input the planned purchase information, every time the first user 11 inputs the planned purchase information of the product to the mobile terminal 5. Then, for example, in a case where the first user 11 moves away from an arrangement position of the predicted product without inputting the planned purchase information of the predicted product to the mobile terminal 5, the information processing apparatus 1 determines that the first user 11 is likely to have forgotten to purchase the predicted product or that the first user 11 is unlikely to recognize presence or the arrangement position of the predicted product, and transmits product information regarding the predicted product (product information that proposes purchase of the predicted product) to the mobile terminal 5 possessed by the first user 11.

With this configuration, for example, the information processing apparatus 1 in the present embodiment may accurately transmit the product information regarding each product to the user 11 who may be determined to be likely to purchase each product. Furthermore, for example, the information processing apparatus 1 may transmit the product information regarding each product at the time when the first user 11 is highly likely to decide to purchase each product by transmitting the product information regarding each product in response to the first user 11 moving away from the arrangement position of each product. Thus, for example, the information processing apparatus 1 may enhance the sales promotion effect of each product accompanying the transmission of the product information to each mobile terminal 5.

Note that, for example, in a case where the product information transmitted from the information processing apparatus 1 is displayed on the output screen (not illustrated), the mobile terminal 5 may collect information indicating an action performed by the user 11 who has browsed the displayed product information.

Specifically, for example, the mobile terminal 5 may display a plurality of buttons for deleting the product information displayed on the output screen, and prompt the user 11 to press a button corresponding to the action performed by the user 11.

More specifically, for example, the mobile terminal 5 may display, as the buttons for deleting the product information displayed on the output screen, a button displaying "have purchased product of notified information" and a button displaying "have not purchased product of notified information".

Then, for example, in a case where the number of times that the button displaying "have not purchased product of notified information" is pressed is greater than the number of times that the button displaying "have purchased product of notified information" is pressed, the information processing apparatus 1 may cause the learning model 133 to be further subjected to training using the training data 132, thereby improving determination accuracy of the learning model 133.

Furthermore, for example, the mobile terminal 5 may display, as the buttons for deleting the product information displayed on the output screen, a button displaying "notified information is valid" and a button displaying "notified information is not valid".

Then, for example, in a case where the number of times that the button displaying "notified information is not valid" is pressed is greater than the number of times that the button displaying "notified information is valid" is pressed, the information processing apparatus 1 may cause the learning model 133 to be further subjected to training using the training data 132, thereby improving the determination accuracy of the learning model 133.

Moreover, for example, the mobile terminal 5 may display, as the buttons for deleting the product information displayed on the output screen, a button displaying "please notify more information" and a button displaying "please stop notification of information".

Then, for example, in a case where the number of times that the button displaying "please stop notification of information" is pressed is greater than the number of times that the button displaying "please notify more information" is pressed, the information processing apparatus 1 may cause the learning model 133 to be further subjected to training using the training data 132, thereby improving the determination accuracy of the learning model 133.

On the other hand, for example, in a case where the number of times that the button displaying "please notify more information" is pressed is greater than the number of times that the button displaying "please stop notification of information" is pressed, the information processing apparatus 1 may decrease a value of the threshold P used in the processing of S28 and the processing of S48.

Furthermore, in the example described above, the case has been described where all the pieces of information indicating the one or more products included in the sequence S are input to the learning model 133 in the processing of S26 and the processing of S46, but the embodiment is not limited to this. Specifically, for example, the list specification unit 114 may input a part of the information indicating the one or more products included in the sequence S to the learning model 133. More specifically, for example, the list specification unit 114 may input, to the learning model 133, information indicating a predetermined number of products added last to the sequence S (for example, one product added last to the sequence S) among the one or more products included in the sequence S.

## Claims

1. A product purchase support program that causes a computer to execute a process, the process comprising:
receiving a first list for a first products for which a first user has performed a predetermined action from a mobile terminal;
specifying a second list for a second products that corresponds to the first products included; and
transmitting, to the mobile terminal, information that indicates that the predetermined action has not been performed for the second products when it is determined that the mobile terminal has moved to a position different from a position where the second products are arranged before information that indicates that the first user has performed the predetermined action for the second products is received from the mobile terminal.

2. The product purchase support program according to claim 1, wherein
the predetermined action is inputting information that indicates an intention to purchase to the mobile terminal.

3. The product purchase support program according to claim 1, wherein the specifying includes:
inputting the first list to a machine learning model is trained by using a plurality of pieces of training data each of which includes a combination of products for which users have performed the predetermined action; and
specifying a list for third products output from the machine learning model by inputting the first list as the second list.

4. The product purchase support program according to claim 1, wherein
the position different from the position where the second products are arranged is a position where an apparatus that confirms purchase of each of the first products is arranged.

5. The product purchase support program according to claim 1, wherein the transmitting includes
when it is determined that, before information that indicates that the first user has performed the predetermined action for one of the second products is received from the mobile terminal, the mobile terminal has moved from an inside to an outside of a range in which a distance to a position where one of the second products is arranged is less than a threshold, transmitting information that indicates that the predetermined action has not been performed for one of the second products to the mobile terminal.

6. An information processing apparatus comprising:
a list reception unit that receives a first list for a first products for which a first user has performed a predetermined action from a mobile terminal;
a list specification unit that specifies a second list for a second products that corresponds to the first products included; and
an information transmission unit that transmits, to the mobile terminal, information that indicates that the predetermined action has not been performed for the second products when it is determined that the mobile terminal has moved to a position different from a position where the second products are arranged before information that indicates that the first user has performed the predetermined action for the second products is received from the mobile terminal.

7. The information processing apparatus according to claim 6, wherein
the predetermined action is inputting information that indicates an intention to purchase to the mobile terminal.

8. The information processing apparatus according to claim 6, wherein the list specification unit is further configured to:
input the first list to a machine learning model is trained by using a plurality of pieces of training data each of which includes a combination of products for which users have performed the predetermined action, and
specify a list for third products output from the machine learning model by inputting the first list as the second list.

9. The information processing apparatus according to claim 6, wherein
the position different from the position where the second products are arranged is a position where an apparatus that confirms purchase of each of the first products is arranged.

10. The information processing apparatus according to claim 6, wherein the information transmission unit is further configured to
when it is determined that, before information that indicates that the first user has performed the predetermined action for one of the second products is received from the mobile terminal, the mobile terminal has moved from an inside to an outside of a range in which a distance to a position where one of the second products is arranged is less than a threshold, transmit information that indicates that the predetermined action has not been performed for one of the second products to the mobile terminal.

11. A product purchase support method for a computer to execute a process comprising:
receiving a first list for a first products for which a first user has performed a predetermined action from a mobile terminal;
specifying a second list for a second products that corresponds to the first products included; and
transmitting, to the mobile terminal, information that indicates that the predetermined action has not been performed for the second products when it is determined that the mobile terminal has moved to a position different from a position where the second products are arranged before information that indicates that the first user has performed the predetermined action for the second products is received from the mobile terminal.

12. The product purchase support method according to claim 11, wherein
the predetermined action is inputting information that indicates an intention to purchase to the mobile terminal.

13. The non-transitory computer-readable storage medium according to claim 11, wherein the specifying includes:
inputting the first list to a machine learning model is trained by using a plurality of pieces of training data each of which includes a combination of products for which users have performed the predetermined action; and
specifying a list for third products output from the machine learning model by inputting the first list as the second list.

14. The product purchase support method according to claim 11, wherein
the position different from the position where the second products are arranged is a position where an apparatus that confirms purchase of each of the first products is arranged.

15. The product purchase support method according to claim 11, wherein the transmitting includes
when it is determined that, before information that indicates that the first user has performed the predetermined action for one of the second products is received from the mobile terminal, the mobile terminal has moved from an inside to an outside of a range in which a distance to a position where one of the second products is arranged is less than a threshold, transmitting information that indicates that the predetermined action has not been performed for one of the second products to the mobile terminal.
